(19)

Europäisches
Patentamt
European
Patent Office
Office européen
des brevets

(11)  **EP 4 403 948 A1**

(12)  **EUROPEAN PATENT APPLICATION**

(43) Date of publication:
**24.07.2024   Bulletin 2024/30**

(21) Application number: **23305062.4**

(22) Date of filing: **18.01.2023**

(51) International Patent Classification (IPC):
**G01S 5/00** *(2006.01)*     **G01S 5/02** *(2010.01)*
**G01S 5/04** *(2006.01)*     **H04W 64/00** *(2009.01)*

(52) Cooperative Patent Classification (CPC):
**G01S 5/0278; G01S 5/011; H04W 64/00;**
G01S 5/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.**
**1119 NS  Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventors:
• **NGUYEN, Viet Hoa**
**35708 RENNES CEDEX 7 (FR)**
• **GRESSET, Nicolas**
**35708 RENNES CEDEX 7 (FR)**
• **CORLAY, Vincent**
**35708 RENNES CEDEX 7 (FR)**
• **CIOCHINA, Cristina**
**35708 RENNES CEDEX 7 (FR)**

(74) Representative: **Plasseraud IP**
**66, rue de la Chaussée d'Antin**
**75440 Paris Cedex 09 (FR)**

(54)  **PROBABILISTIC RAY-TRACING AIDED POSITIONING**

(57)    For determining the location of a transmitter in an environment comprising at least one receiver, the disclosure provides:
- Obtaining geometrical information related to said environment representative of a 3D model,
- Receiving a signal at said receiver and measuring at least one angle of arrival "AoA" of said signal, and
- Based on said measurements:
• Computing statistical properties of AoA; and
• Using said 3D model and said statistical properties of AoA for obtaining paths with associated respective weights; and

- using said paths with associated weights to estimate the location of said transmitter.

FIG. 2

**EP 4 403 948 A1**

**Description**

The present disclosure relates to positioning methods and devices.

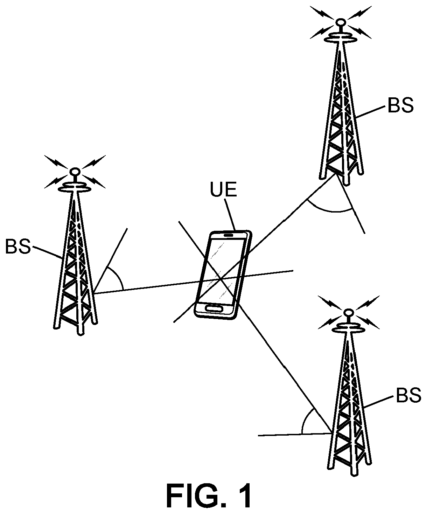

Standard positioning systems rely on measurements of so called "line-of-sight" (LOS). As an example shown in Figure 1, if three base-stations ("BS") estimate the angle of arrival (AoA) of a reference signal transmitted by a user equipment ("UE") such as a telecommunication terminal, the regular triangulation method can be implemented as follows. A server, knowing the position of the two BS and the measured AoA, looks for the intersection of the three rays leaving the BS in the measured AoA direction. The estimated position of the UE is this intersection.

Nevertheless, the received signals at the BS may be "non line-of-sight" (NLOS). The signal might have been reflected before arriving to the BS. In this case, the measured AoA does not indicate the real direction of the UE but the direction of the last reflecting object. As a result, the above standard triangulation is not sufficient for the positioning operation.

One solution to address this issue is to use the knowledge of the environment to improve the positioning operation. One can for instance, in an offline phase, create a database of measurements (at the BS) corresponding to each possible position of the UE. Then, in the online phase, a measurement is performed and the most similar measurement in the database is searched. Once found, the position corresponding to the measurement is the estimated position. This class of methods is called "fingerprinting". The database can be established via real measurements or using a digital twin of the environment combined with ray tracing.

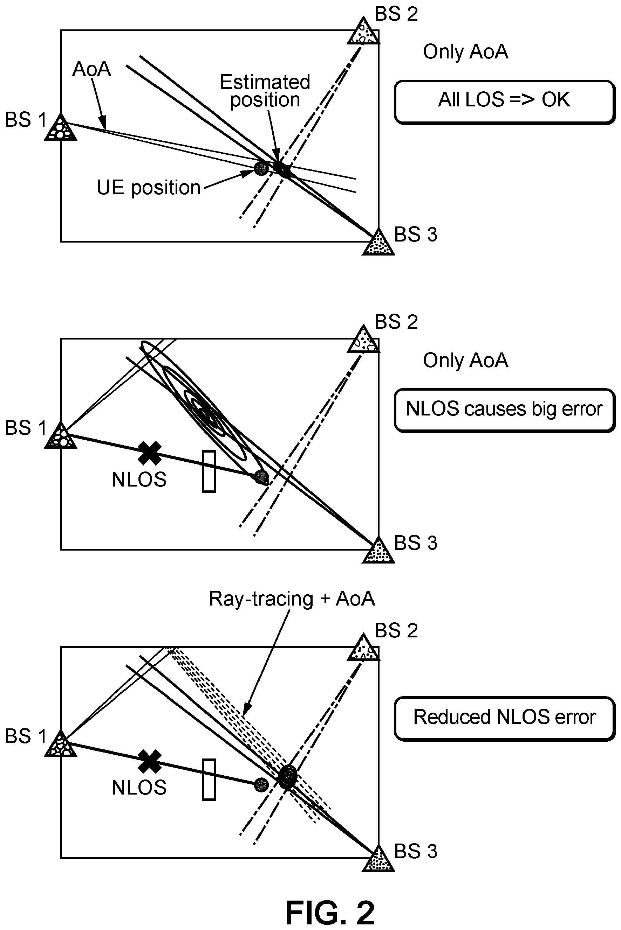

Alternatively, instead of using a database, online ray tracing can be considered: given measured AoA, ray tracing in these AoA directions is performed. The intersection of the rays is then the estimated position. This approach is called "reverse ray tracing", the principle of which is illustrated in Figure 2. Alternatively, geometric equations rather than conventional ray tracing can be considered.

Of course, the measurements may not be perfectly accurate, and the measured AoA corrupted by some noise. Several rays can be launched in an interval around the measured AoA. The considered width of the interval is twice the estimated standard deviation of the estimated AoA value. A least square solution, assuming i.i.d. Gaussian noise on the estimated AoA, can be also used.

In all these known techniques, the statistics of the measurement are not fully taken into account in conventional ray-tracing aided positioning.

Since useful information is not taken into account, the performance cannot be optimal.

The present disclosure aims to improve the situation.

To that end, it proposes a method for determining the location of a transmitter in an environment comprising at least one receiver, the method comprising:

- Obtaining geometrical information related to said environment representative of a 3D model,
- Receiving a signal at said receiver and measuring at least one angle of arrival "AoA" of said signal, and
- Based on said measurements:

  • Computing statistical properties of AoA; and
  • Using said 3D model and said statistical properties of AoA for obtaining paths with associated respective weights; and

- using said paths with associated weights to estimate the location of said transmitter.

The aforesaid environment and signal can be related to any kind of wave: radiofrequency, or acoustic, or optic, etc. The measurement can hence be performed by a radiofrequency antenna, or any 2D or 3D optic sensor (couple cameras for example), or any microphone array.

In an embodiment, obtaining said paths with associated weights can comprise:

- Obtaining samples of AoA of said signal, based on a distribution defined by said statistical properties of AoA,
- Computing the paths using the 3D model, the paths starting at the receiver with angles defined by said samples, and
- Associating a same weight to all paths.

Alternatively, obtaining said paths with associated weights can comprise:

- Computing the paths using the 3D model, the paths starting at the receiver and extending in possible angles of a predefined range, and
- Computing each weight associated to a path, based on said statistical properties of AoA.

2

Said predefined range can be an angular sector of 360° (discretized by a pitch of 5° for example) if there is no *a priori* knowledge on a possible arrival of the wave, or an angular sector of 180° for example in the case of a sensor stuck to a support surface, or a sector of 90° (when the sensor is located in a corner of a room typically), or other.

In an embodiment, the method can comprise an estimation of the location of the transmitter, comprising:

- Measuring at least two AoAs, and for each AoA measurement:

    - Obtaining said paths with associated respective weights,
    - For a position $X_k$, $k = 1..K$; defining a region $\mathcal{X}_k$ covering said position $X_k$,
    - Collecting all the paths crossing region $\mathcal{X}_k$,
    - Computing a probability associated to position $X_k$ with respect to the considered AoA measurement, based on the paths which cross region $\mathcal{X}_k$, and their associated respective weights,

- Determining the estimated location of the transmitter based on said computed probabilities associated to respective AoA measurements.

In this embodiment, said computed probability can be given by a product of all weights associated with paths that cross region $\mathcal{X}_k$.

In an alternative embodiment, the computed probability can be obtained by:

- Computing a value associated to each path which crosses the region $\mathcal{X}_k$, the value depending on the relative positions of $X_k$ and the path, and
- Computing the product of all values associated with paths that cross region $\mathcal{X}_k$.

In this alternative embodiment, the aforesaid value can depend on the path weight divided by a distance between $X_k$ and an intersection point of the path and region $\mathcal{X}_k$.

Alternatively, the aforesaid value can depend on the path weight divided by the distance between $X_k$ and an orthogonal projection of $X_k$ onto the path.

Moreover, determining the estimated location of the transmitter based on said computed probabilities can comprise:

- For each position $X_k$, computing a value $\beta_k$ from computed probabilities associated each one to an AoA,
- Estimating the location $\hat{x}$ of the transmitter by determining the position $X_k$ for which a maximum is reached between said values $\beta_k$.

Alternatively, determining the estimated location of the transmitter based on said computed probabilities can comprise:

- For each position $X_k$, computing a value $\beta_k$ from computed probabilities associated each one to an AoA,
- Estimating the location $\hat{x}$ of the transmitter as:

$$\hat{x} = \frac{\sum_{k=1}^{K} X_k \cdot \beta_k}{\sum_{k=1}^{K} \beta_k}$$

The present disclosure aims also at a computer program comprising instructions causing the implementation of the method defined above when such instructions are run by a processor.

It aims also at a device for determining the location of a transmitter in an environment comprising a plurality of receivers having respective known positions, the device comprising an interface for receiving measurements performed by the receivers and a processor to implement the method defined above.

More details are presented in the specification below, with reference to the appended drawings where:

- Figure 1 shows the principle of positioning based on angle of arrivals' measurements in a line-of-sight (LOS) case,

- Figure 2 Illustrates the use of ray-tracing to enhance the positioning,
- Figure 3 shows an example of the environment comprising three receivers Rx (for example, three base stations BS for a radiofrequency environment),
- Figure 4 shows the transmitter Tx to be localized, transmitting a signal (for example a radiofrequency signal),
- Figure 5 shows a step where receivers perform the Angle of Arrivals measurements,
- Figure 6 illustrates the obtaining of the paths using the geometry of the environment, each path having a different weight depending on its corresponding statistical property of AoA ,
- Figure 7 illustrates the estimated transmitter positioning,
- Figure 8 shows an example of embodiment of a device such as a receiver Rx to perform the method presented above,
- Figure 9 illustrates an example of main steps of a method according to the present disclosure.

In the description below, a scenario is considered, where a transmitter (or Tx), such as a user equipment (UE) in a radiofrequency environment in this example, sends a positioning signal to one or several receivers (Rx), such as base stations. The goal of the base stations is to locate the UE with the help of a 3D model of the environment (via ray-tracing for example).

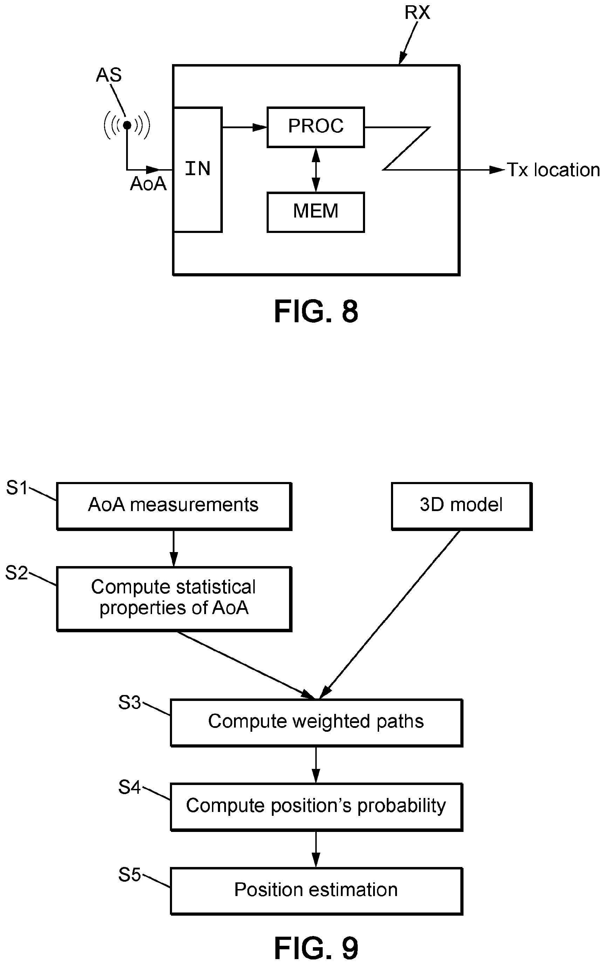

It is intended then to exploit here not only the geometrical property (by a ray-tracing simulation for example) of environment, but also the statistical property of measurement to enhance the positioning in a wireless system. As presented in Figure 9, the method can comprise the following steps.

In step S1 of Figure 9, measurements are performed by at least one Rx which receives a signal transmitted by Tx. Rx measures more particularly the angle of arrival of the signal (AoA).

Moreover, data of a 3D scene (or "3D model") are obtained, characterizing the geometrical property of a considered environment (for example by ray-tracing).

In step S2, statistical properties of AoA are computed from the measurements.

In step S3, the paths with their associated weights are computed using the statistical properties of the AoA and the 3D model. One of the following techniques can be considered:

- The paths' angle of departure is generated based on the corresponding aforesaid statistical property of AoA. The 3D scene characterizes the remaining aspects of each path. The weight assigned to each path is the same for all paths, or
- The paths' angle of departure is uniformly generated. Then, the 3D scene characterizes the remaining aspects of each path, and each weight to assign to a path is computed according to the corresponding statistical property of AoA.

In step S4, the probability of the transmitter's position is computed, given the obtained weighted paths.

In step S5, the transmitter's position is then estimated.

The aforesaid computations are detailed below.

$X$ denotes a random variable representing the position of the transmitter, $\Theta$ denotes a random variable representing the AoA ( $\Theta$ varies in $[0,2\pi]$ in 2-dimensional; or in $[0,\pi] \times [-\pi,\pi]$ in 3-dimensional), and Y denotes a random variable representing the measurements. The statistical model for AoA measurement can be expressed as:

$$Y = \Theta + N,$$

where N denotes the random noise.

Regarding the notations, for the sake of simplicity, $p(\theta|y)$ is a simplified notation of $P(\Theta = \theta | Y = y)$ and similarly $p(x|y)$ is the simplified notation for $p(X = x|Y = y)$. The variable $y$ relates here to a measurement, and one instance of theta relates to one of the aforesaid samples of AoA.

In the considered problem, to be able to estimate the position of transmitter, at least two AoA measurements are needed. Supposing having $n$ measurements $\boldsymbol{y} = [y_1, y_2, ..., y_n]$ and having 3D model (being denoted as $\psi$), the goal is to obtain $p(x|\boldsymbol{y}, \psi)$. For the sake of simplicity, it is assumed that there is one measurement per receiver, and $n$ receivers.

Hereafter, a ray is defined as a path, characterized by a 3D scene, starting from a given location and with an angle $\theta$. Here, the starting locations are receivers' position (which is perfectly known). Let ($i$) refer to $i^{th}$ receiver, $i = 1,2,..,n$. Hence, the notation $path(\theta,i)$ is used to refer to a ray or path starting from $i^{th}$ receiver at the angle $\theta$. Regrouping a group of paths from $n$ receivers yields:

$$path(\boldsymbol{\theta}) = [\, path(\theta_1, 1), .., path(\theta_n, n)] \ (2)$$

Of course, there exists many of such groups $path(\theta)$ since one receiver $i$ usually launches several rays with

different angles $\theta$, so that there are many *path($\theta$,i)*. The set of possible angles $\theta = [\theta_1, \theta_i.., \theta_n]$ is denoted C. The probability $p(x|\boldsymbol{y}, \psi)$ is then expressed as:

$$p(x|\boldsymbol{y}, \psi) = \sum_{\boldsymbol{\theta} \in \mathcal{C}} p(x|\psi, \boldsymbol{\theta}) . p(\boldsymbol{\theta}|\boldsymbol{y}) \quad (3)$$

The second term in equation (3), $p(\theta|\boldsymbol{y})$, corresponds to statistics of AoA based on measurements. Hence, the quantity $p(\theta|\boldsymbol{y})$ relates to the aforesaid computed statistical properties of AoA. In case of independence, we have

$$p(\boldsymbol{\theta}|\boldsymbol{y}) = \prod_{i=1}^{n} p(\theta_i|y_i)$$

Given 3D model $\psi$ and angle $\theta$, one can obtain the path *path($\theta$)*. In this step, a raytracing algorithm or a manual computation can be used. The first term in equation (3) then can be rewritten as

$$p(x|\psi, \boldsymbol{\theta}) = p(x|path(\boldsymbol{\theta})) \quad (4)$$

In words, the probability in equation (4) refers to the probability a position $x$ being the transmitter's position, given the paths in environment. A first option inducing a simple implementation is to consider the position as squares (or cubes in 3D case) $\mathcal{X} \ni x$. The probability in equation (4) can be written as follows:

- $p(\mathcal{X}|path(\boldsymbol{\theta})) = 1$     If $path(\boldsymbol{\theta})$ go through $\mathcal{X}$    (5)

- $p(\mathcal{X}|path(\boldsymbol{\theta})) = 0$     otherwise.

A second option provides a more advanced statistical model for $p(x|path(\theta))$ and is presented below. Supposing that the path *path($\theta$)* crosses region $X$, one computes the "distance" $d(x,path(\theta_i,i))$ between the individual path *path($\theta_i,i$)* and position $x$. This can be:

- the distance between position $x$ and the intersection between the path and the region, noted $\{path(\theta_i, i), \mathcal{X}\}$; or

- the distance between $x$ and its orthogonal projection onto *path($\theta_i,i$)*. In this second option, the probability in equation (4) is written as:

- $p(\mathcal{X}|path(\boldsymbol{\theta})) = \prod_i \frac{1}{d(x,path(\theta_i,i))}$     If $path(\boldsymbol{\theta})$ go through $\mathcal{X}$    (6)

- $p(\mathcal{X}|path(\boldsymbol{\theta})) = 0$     If else.

As a result, in order to compute equation (3) via ray tracing, it can be proceeded to the following steps (which can be defined typically in an algorithm of a computer program):

1. For each of $n$ receivers, discretize uniformly

$$\mathcal{C} = [0, 2\pi[,$$

to have $l$ rays (i.e. one ray for each

$$\theta \in \mathcal{C}$$

). Receive the probability $p(\theta_i|y_i)$ for each receiver.
2. Launch the $n \times l$ rays in the discretized directions.

3. For each distinct region $\mathcal{X}_k$ in the scene:

    a. Collect all the rays crossing $\mathcal{X}_k$.

    b. For all m possible combinations of *n* rays (where each of the *n* rays comes from a different receiver), compute the corresponding value $\alpha_j = \prod_{i=1}^{n} p(\theta_i|y_i)$.

    c. Compute $\beta_k = \sum_{j=1}^{m} \alpha_j$ to obtain the probability defined in equation (3).

4. The estimated position is $\mathcal{X}_M$ where M = $\operatorname{argmax}_k \beta_k$

An alternative embodiment to compute (3) is via a Monte Carlo sampling. Typically, the rays can be sampled (i.e. chosen) directly according to $p(\theta i|y_i)$. Consequently, the above estimation algorithm can be modified as follows (especially in items 1 and 3.b):

    1. For each of the *n* BS, sample *l* rays according to $p(\theta_i|y_i)$.
    2. Launch the $n \times l$ rays in the sampled directions.
    3. For each distinct $\mathcal{X}_k$ in the scene:

        a. Collect all the rays crossing $\mathcal{X}_k$.
        b. Find m, the number of possible combinations of *n* rays (where each of the *n* rays comes from a different receiver) and set $\beta_k = m$ to obtain (3).

    4. The estimated position is $\mathcal{X}_M$ where $M = \operatorname{argmax}_k \beta_k$

Therefore, in order to generalize the principles of these two algorithms, a notion of "weighted paths" can be introduced here, where a weighted path is a couple {path($\theta$), weight} generated according to the distribution of paths computed from the measurement (e.g. from $p(\theta|y_i)$). The weights refer to the quantities weighting the combinations of the rays in step 3b of the first algorithm.

In the step 4 of both aforementioned methods, the estimated position $x_M$ can also be computed by marginalizing $x_k$ over $\beta_k$ as follows:

$$x_M = \frac{\sum_k x_k \beta_k}{\sum_k \beta_k} \qquad (7)$$

The distribution of paths can be either used to generate the AoA $\theta$ (as step 1 of the second algorithm), and/or the weight (as step 3b of the first algorithm).

From this perspective, a generalization of the principles presented above can be defined as follows.

In a 3D model characterising paths between a transmitter Tx and at least one receiver Rx, the position of Tx can be determined by:

    A. Performing measurements at Rx.
    B. Computing distributions of rays from the measurements.
    C. Generating weighted rays according to the computed distributions.

In a first embodiment, step C above can be performed as follows:
For each measurement $y_i$, the interval

$$\mathcal{C} = [0, 2\pi[$$

is discretized uniformly to have $l_i$ rays per measurement (one ray for each

$$\theta \in \mathcal{C}$$

). Then, the selected rays are launched.

Then, the estimation of Tx's position can be performed as follows:

I. Collect all the rays crossing $\mathcal{X}_k$ .

II. For all m possible combinations of *n* rays (where each of the *n* rays comes from a different BS), compute the corresponding $\alpha_j = \prod_{i=1}^{n} p(\theta_i | y_i)$ .

III. Compute $\beta_k = \sum_{j=1}^{m} \alpha_j$ to obtain (3).

Alternatively, step C above can be performed as follows:

For each of the *n* measurements $y_i$, sample $l_i$ rays according to $p(\theta|y_i)$. Then, launch all the sampled rays.

Then, the estimation of Tx's position can be performed as follows:

- Collect all the rays crossing $\mathcal{X}_k$ .
- Find m, the number possible combinations of *n* rays (where each of the *n* rays comes from a different BS). Set $\beta_k$ = m to obtain (3).

In the method above, of course, several receivers can be used for performing the measurements. For a given AoA measurement typically, the term $p(\theta|y_i)$ can be refined with several "sub-measurements" (e.g., performed by a panel of antennas at the receivers). In this case, a measurement $y_i$ is $y_i = \{y_i^1, y_i^2, \dots\}$ . Alternatively, a single receiver can be used and can be mobile to perform measurements according to different AoAs.

In practice, the digital twin of the scene may not be perfectly modelled. Typically, the location of the objects and their characteristics may not be exactly known; and/or the ray-tracing algorithm may ignore some physical aspects. In these cases, one should establish a more complex statistical model taking into account the error of 3D model.

Supposing an erroneous digital twin $\psi = \hat{\psi} + \eta$, where $ denotes the true propagation environment, $\psi$ being the 3D model, $\eta$ denotes the random error in the 3D model. The error encompasses the inaccuracy of objects' position, dimension, material and also the resolution of raytracing. A random variable can be used to model this error. In this sense, the problem in equation (3) now becomes

$$p(x|y) = \sum_{\theta \in \mathcal{C}} p(x|\theta).p(\theta|y) = \sum_{\theta \in \mathfrak{I}}(\int_{\psi} p(x|\theta,\psi)p(\psi)d\psi).p(\theta|y) \qquad (8)$$

Practical examples of the different situations discussed above are given below.

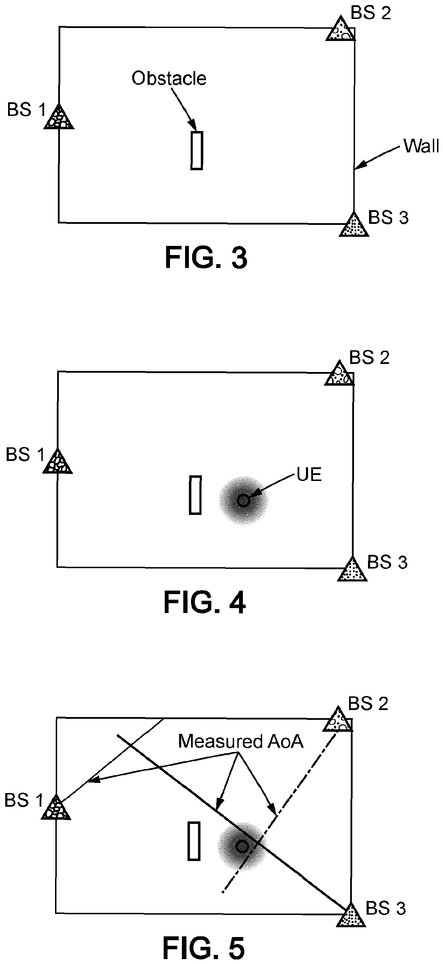

Typically, when a simple environment is considered, for example with only one obstacle and four walls, where three receivers are deployed as presented in the example of Figure 3 (the positions of these Rx being perfectly known), the environment is therefore perfectly modelled to obtain a 3D model containing the geometrical properties such as the position, the orientation, the dimension of the walls and the obstacle. A transmitter, in the environment with an unknown position, can be needed to be localized. This transmitter Tx transmits a radio signal, as presented in the example of Figure 4.

Each receiver Rx receives the radio signal, and measures the angle of arrival (AoA) based on the received signal. As an obstacle in the environment can block the direct path between the first receiver BS1 and the transmitter UE, the measured AoA at Rx BS1 is along the direction of the upper wall, while the Rxs BS2 and BS3 measure the AoA of the direct path between them and the Tx UE (as shown in Figure 5). However, the measured AoAs can be erroneous (due to noises, and/or interference, etc.).

In this situation typically, according to the embodiments presented above, each receiver can compute the statistical properties of its AoA based on its own receiver's configuration. As shown in figure 8, the configuration of a receiver Rx that affects the measurement can be, as presented above, an antenna system AS, for example coupled through an interface IN to a processing circuit including a processor PROC and a memory MEM. The memory stores at least instructions of a computer program according to the present disclosure. The algorithm can start from the AoA estimation, as presented above, and then proceeds with the statistical properties' estimation of measurements according to a distribution density function with associated parameters, or to a point mass distribution, etc. Using the 3D model of environment and measured AoAs with associated statistical properties, it is possible then to trace back the path that the signal takes to arrive at a receiver Rx. Taking the example of a receiver BS1, supposing Rx BS1 obtains the AoA with the following statistics:

- AoA = 43°, 40% (i.e., $p(\theta = 43°|y_i)$=0.4),
- AoA = 44°, 20%
- AoA = 45°, 10%
- AoA = 46°, 10%
- AoA = 47°, 10%
- AoA > 47°, 5%, AoA<43, 5%.

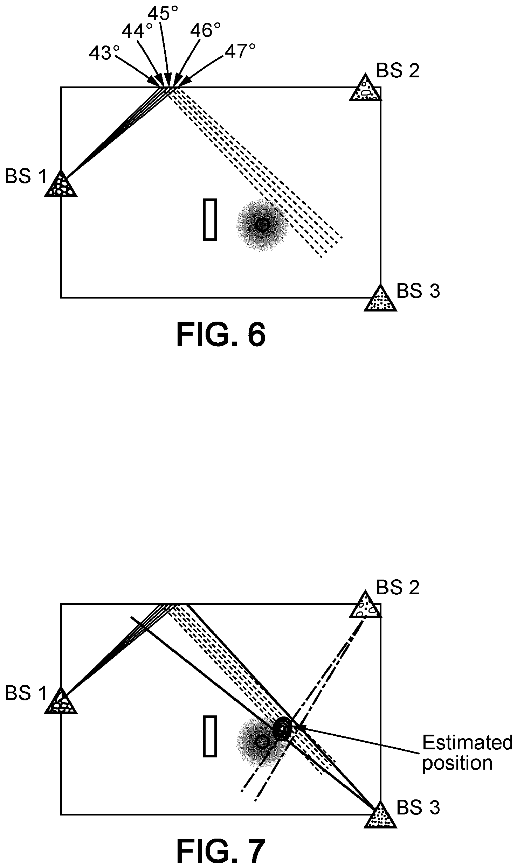

ray-tracing simulation can be used in 3D model for these five rays where each ray starts at Rx BS1 with one of the above-defined angles, as shown in Figure 6.

Combining the paths with associated weights from Rxs BS1, BS2 and BS3, the estimated position of Tx UE can be computed as illustrated in Figure 7.

**Claims**

1. A method for determining the location of a transmitter in an environment comprising at least one receiver, the method comprising:

   - Obtaining geometrical information related to said environment representative of a 3D model,
   - Receiving a signal at said receiver and measuring at least one angle of arrival "AoA" of said signal, and
   - Based on said measurements:

     • Computing statistical properties of AoA; and
     • Using said 3D model and said statistical properties of AoA for obtaining paths with associated respective weights; and

   - using said paths with associated weights to estimate the location of said transmitter.

2. The method of claim 1, wherein obtaining said paths with associated weights comprises:

   • Obtaining samples of AoA of said signal, based on a distribution defined by said statistical properties of AoA,
   • Computing the paths using the 3D model, the paths starting at the receiver with angles defined by said samples, and
   • Associating a same weight to all paths.

3. The method of claim 1, wherein obtaining said paths with associated weights comprises:

   • Computing the paths using the 3D model, the paths starting at the receiver and extending in possible angles of a predefined range, and
   • Computing each weight associated to a path, based on said statistical properties of AoA.

4. The method according to anyone of the precedent claims, comprising an estimation of the location of the transmitter, said estimation comprising:

   • Measuring at least two AoAs, and for each AoA measurement:

     - Obtaining said paths with associated respective weights,
     - For a position $X_k$, $k$ = 1..$K$; defining a region $\mathcal{X}_k$ covering said position $X_k$,
     - Collecting all the paths crossing region $\mathcal{X}_k$ ,
     - Computing a probability associated to position $X_k$ with respect to the considered AoA measurement, based on the paths which cross region $\mathcal{X}_k$ , and their associated respective weights,

• Determining the estimated location of the transmitter based on said computed probabilities associated to respective AoA measurements.

**5.** The method of claim 4, wherein, said computed probability is given by a product of all weights associated with paths that cross region $\mathcal{X}_k$ .

**6.** The method of claim 4, wherein, said computed probability is computed by:

• Computing a value associated to each path which crosses the region $\mathcal{X}_k$ , the value depending on the relative positions of $X_k$ and the path,

• Computing the product of all values associated with paths that cross region $\mathcal{X}_k$ .

**7.** The method of claim 6, wherein said value depends on the path weight divided by a distance between $X_k$ and an intersection point of the path and region $\mathcal{X}_k$ .

**8.** The method of claim 6, wherein said value depends on the path weight divided by the distance between $X_k$ and an orthogonal projection of $X_k$ onto the path.

**9.** The method according to anyone of claims 4 to 8, wherein determining the estimated location of the transmitter based on said computed probabilities comprises:

• For each position $X_k$, computing a value $\beta_k$ from computed probabilities associated each one to an AoA,
• Estimating the location $\hat{x}$ of the transmitter by determining the position $X_k$ for which a maximum is reached between said values $\beta_k$ .

**10.** The method according to anyone of claims 4 to 8, wherein determining the estimated location of the transmitter based on said computed probabilities comprises:

• For each position $X_k$, computing a value $\beta_k$ from computed probabilities associated each one to an AoA,
• Estimating the location $\hat{x}$ of the transmitter as:

$$\hat{x} = \frac{\sum_{k=1}^{K} X_k \cdot \beta_k}{\sum_{k=1}^{K} \beta_k}$$

**11.** A computer program comprising instructions causing the implementation of the method according to anyone of the preceding claims when such instructions are run by a processor.

**12.** A device for determining the location of a transmitter in an environment comprising a plurality of receivers having respective known positions, the device comprising an interface for receiving measurements performed by the receivers and a processor to implement the method according to anyone of claims 1 to 10.

FIG. 1

BS 2

AoA

Estimated position

BS 1

UE position

Only AoA

All LOS => OK

BS 3

BS 2

BS 1

NLOS

Only AoA

NLOS causes big error

BS 3

Ray-tracing + AoA

BS 2

BS 1

NLOS

Reduced NLOS error

BS 3

FIG. 2

**FIG. 3**

**FIG. 4**

**FIG. 5**

FIG. 6

FIG. 7

RX

AS

AoA

IN → PROC

PROC ↔ MEM

→ Tx location

## FIG. 8

S1 — AoA measurements

3D model

S2 — Compute statistical properties of AoA

S3 — Compute weighted paths

S4 — Compute position's probability

S5 — Position estimation

## FIG. 9

Europäisches
Patentamt

European
Patent Office

Office européen
des brevets

# EUROPEAN SEARCH REPORT

Application Number

EP 23 30 5062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/224930 A1 (CHIZHIK DMITRY [US] ET AL) 18 September 2008 (2008-09-18) | 1-3,11,12 | INV.<br>G01S5/00 |
| A | * figures 1-4 *<br>* paragraph [0007] - paragraph [0010] *<br>* paragraph [0018] - paragraph [0019] *<br>* paragraph [0023] - paragraph [0054] *<br>* paragraph [0070] - paragraph [0073] *<br>----- | 4-10 | G01S5/02<br><br>ADD.<br>G01S5/04<br>H04W64/00 |
| Y | US 2021/243564 A1 (HOLLAR SETH EDWARD-AUSTIN [US] ET AL) 5 August 2021 (2021-08-05) | 1-3,11,12 | |
| A | * figures 10-11D *<br>* paragraph [0005] *<br>* paragraph [0070] - paragraph [0073] *<br>----- | 4-10 | |
| Y | WO 00/69198 A1 (CELL LOC INC [CA]; FATTOUCHE MICHEL [CA] ET AL.) 16 November 2000 (2000-11-16) | 1-3,11,12 | |
| A | * page 4, line 21 - page 6, line 18 *<br>----- | 4-10 | |

TECHNICAL FIELDS
SEARCHED      (IPC)

H04W
G01S

The present search report has been drawn up for all claims

| Place of search | Date of completion of the search | Examiner |
|---|---|---|
| Munich | 28 June 2023 | Krummenacker, Benoit |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 30 5062

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2023

| Patent document cited in search report | Publication date | Patent family member(s) | | Publication date |
|---|---|---|---|---|
| US 2008224930 A1 | 18-09-2008 | AT | 498846 T | 15-03-2011 |
| | | EP | 2126599 A1 | 02-12-2009 |
| | | JP | 5674315 B2 | 25-02-2015 |
| | | JP | 2010525300 A | 22-07-2010 |
| | | KR | 20090125092 A | 03-12-2009 |
| | | US | 2008224930 A1 | 18-09-2008 |
| | | WO | 2008153548 A1 | 18-12-2008 |
| US 2021243564 A1 | 05-08-2021 | EP | 4097501 A1 | 07-12-2022 |
| | | US | 2021243564 A1 | 05-08-2021 |
| | | WO | 2021155009 A1 | 05-08-2021 |
| WO 0069198 A1 | 16-11-2000 | AU | 4282200 A | 21-11-2000 |
| | | CA | 2307532 A1 | 06-11-2000 |
| | | CN | 1360804 A | 24-07-2002 |
| | | WO | 0069198 A1 | 16-11-2000 |

EPO FORM P0459

For more details about this annex : see Official Journal of the European Patent Office, No. 12/82